# Europäisches Patentamt

# European Patent Office

# Office européen des brevets

(19)

(11) Veröffentlichungsnummer : **0 118 726**
**B1**

(12)

# EUROPÄISCHE PATENTSCHRIFT

(45) Veröffentlichungstag der Patentschrift :
07.05.86

(21) Anmeldenummer : 84101037.4

(22) Anmeldetag : 02.02.84

(51) Int. Cl.⁴ : **C 09 J  3/14, C 09 J  7/02,
C 08 F220/00**

(54) Haftkleber auf Basis von wässrigen Polyacrylat-Dispersionen für abziehbare Papieretiketten.

(30) Priorität : 11.02.83 DE 3304695

(43) Veröffentlichungstag der Anmeldung :
19.09.84 Patentblatt 84/38

(45) Bekanntmachung des Hinweises auf die Patenterteilung : 07.05.86 Patentblatt 86/19

(84) Benannte Vertragsstaaten :
**BE DE FR GB IT NL**

(56) Entgegenhaltungen :
**DE-A- 1 594 125
DE-A- 1 814 115
DE-A- 2 407 494
US-A- 3 900 674
CHEMICAL ABSTRACTS, Band 82, 1975, Seite 47, Nr.
112849h, Columbus, Ohio, US**

(73) Patentinhaber : **BASF Aktiengesellschaft
Carl-Bosch-Strasse 38
D-6700 Ludwigshafen (DE)**

(72) Erfinder : **Mueller, Helmut
Leipziger Strasse 58
D-6750 Kaiserslautern (DE)**
Erfinder : **Tuerk, Johannes
Oberkreuzstrasse 19
D-6737 Boehl-Iggelheim (DE)**
Erfinder : **Druschke, Wolfgang, Dr.
Berliner Strasse 28
D-6716 Dirmstein (DE)**

**0 118 726**

**Beschreibung**

Zur Preisauszeichnung von Gütern werden im allgemeinen Klebeetiketten eingesetzt, die besonders gut auf den Gütern haften. Im Gegensatz hierzu sind für Werbeaussagen und Marktartikelbezeichnungen von Gebrauchsgütern Papieretiketten erwünscht, die sich leicht rückstandslos abziehen lassen. Für die Herstellung derartiger leicht abziehbarer Papieretiketten werden bis jetzt in der Praxis ausschließlich Haftkleber-Lösungen auf Basis von Natur- oder Synthesekautschuk sowie von Polyisobutylen eingesetzt, die mit Weichharzen und/oder Weichmachern modifiziert sind und die einen weichen, stark klebrigen Film bilden. Als Lösungsmittel werden dabei z. B. Benzin, Toluol, Aceton, Ethylacetat usw. eingesetzt. Die Herstellung derartiger Kleber-Lösungen ist technisch aufwendig, da beispielsweise die Naturkautschukanteile auf Walzstühlen oder Knetern mastifiziert und die Elastomeren unter Verwendung von Löseknetern oder Dissolvern in den organischen Lösungsmitteln gelöst werden müssen. Zudem handelt es sich bei den Lösungsmitteln um brennbare Stoffe, so daß bei der Verwendung der Klebstoff-Lösungen explosionsgeschützte Beschichtungsanlagen angewandt und Lösungsmittelrückgewinnungsanlagen nachgeschaltet werden müssen. Ein Nachteil derartiger üblicher Klebstoffe ist zudem vor allem ihre geringe Alterungsbeständigkeit, ein verhältnismäßig schnelles Vergrauen der Etikettenoberfläche durch Weichmacher-Migration, starker Haftungsanstieg auf unpolaren Oberflächen, z. B. aus Polyethylen, und Störungen beim Drucken und Stanzen der Etiketten durch Fadenziehen des Klebers.

Aus der EP-PS 0 039 797 ist es bekannt, Lösungen von Polyacrylsäureestern und Polyisocyanaten in organischen Lösungsmitteln zur Herstellung von abziehbaren Papieretiketten einzusetzen, doch treten auch hierbei durch die Verwendung von organischen Lösungsmitteln Nachteile der oben genannten Art auf. Wegen des Gehalts an reaktiven Polyisocyanaten weisen Mischungen dieser Art zudem nur eine begrenzte Topfzeit auf und die Klebewerte sind von der Luftfeuchtigkeit abhängig und daher schlecht reproduzierbar.

Die Nachteile, die bei der Verarbeitung von lösungsmittelhaltigen Klebern entstehen, können häufig durch den Einsatz wäßriger Polymer-Dispersionen vermieden werden. Man hat daher schon wäßrige Dispersionen von Polybutylacrylat zur Herstellung von Papieretiketten eingesetzt, doch können damit hergestellte Etiketten von Substraten wie PVC, Weich-PVC und lackierten Oberflächen nach längerer Verklebungszeit meist nicht mehr rückstandsfrei abgezogen werden. Setzt man nun derartigen Polyacrylat-Dispersionen Weichmacher zu, so werden die Klebemassen zwar weicher und damit beschichtete Etiketten können auch nach längerer Verklebung wieder abgezogen werden, doch werden derartige Klebeetiketten nach der Wärmelagerung « durchfettet », d. h. der Weichmacher wandert aus der Klebemasse in das Trägermaterial. Außerdem wird durch den Gehalt an Weichmacher die Kohäsion der Klebemasse verschlechtert, so daß sich beim Abziehen der Klebeetiketten vom Substrat die Klebemasse teils auf dem Etikett, teils auf dem Substrat befindet.

Nach den Angaben der DE-AS 24 07 494 lassen sich diese Nachteile dadurch überwinden, daß man ein Gemisch der monomeren Acrylate unter Zusatz von 2 bis 20 Gew.% eines oder mehrerer flüssiger Weichmacher auf Basis von Kohlenwasserstoffen polymerisiert. Bei diesem Verfahren ist man jedoch auf flüssige Kohlenwasserstoffweichmacher beschränkt und diese wandern aus den eingesetzten polare Polymere enthaltenden Gemischen bei längerer Lagerung aus.

Es wurde nun gefunden, daß Haftkleber auf Basis von wäßrigen Polyacrylatdispersionen die Acrylester 4 bis 8 C-Atome enthaltender Alkanole einpolymerisiert enthalten und die einen Gehalt an Weichmacher aufweisen, für abziehbare Papieretiketten besonders geeignet sind, wenn sie

A) 70 bis 90 % ihres Gewichts einer oder mehrerer Polyacrylat-Dispersionen, die sich insgesamt aus

a) 96 bis 84 Gew.% eines Gemisches aus ($a_1$) 2-Ethylhexylacrylat und $a_2$) n-Butyl- und/oder iso-Butyl-acrylat und/oder -methacrylat in einem Gewichtsverhältnis von ($a_1$) : ($a_2$) von 70 : 30 bis 30 : 70,

b) 3 bis 7 Gew.% Acryl- und/oder -methacrylnitril,

c) 0,5 bis 3 Gew.% Acryl- und/oder -methacrylsäure,

d) 0,5 bis 5 Gew.% N-Methylol-acrylamid und/oder -methacrylamid und

e) 0 bis 1 Gew.% Vinylsulfonsäure aufbauen,

wobei die Gewichtsprozente für a) bis e) auf das Gewicht der Polyacrylate bezogen ist, und

B) 10 bis 30 Gew.% ihres Gewichts Weichmacher

enthalten.

Derartige Haftkleber eignen sich insbesondere für die Beschichtung von Papier- und Kunststoffetiketten. Filme aus den Haftklebern besitzen hohe Kohäsion, gute Schälfestigkeit und einwandfreies Abziehverhalten auf den üblichen Substraten, auch wenn sie in verklebtem Zustand lange gelagert werden. Die neuen Haftkleber sind sehr beständig gegen die Migration von Weichmachern in das Trägerpapier. Sie lassen sich sofort nach dem Trocknen und auch nach der Lagerung in verklebtem Zustand unter Adhäsionsbruch vom Substrat leicht abziehen. Diese Eigenschaften der neuen Haftkleber sind überraschend und stellen einen besonderen Vorteil gegenüber den bekannten Haftklebern für Etiketten dar.

Die Herstellung der Polyacrylat-Dispersionen für den neuen Haftkleber kann in üblicher Weise durch Emulsionspolymerisation der Monomeren a) bis e) durchgeführt werden, wobei die Menge an Monomeren zwischen 40 und 70 Gew.%, bezogen auf die Gesamtmenge an Monomeren und wäßriger Phase, liegen kann. Die Herstellung kann kontinuierlich oder chargenweise erfolgen, wobei die chargenweise

2

Polymerisation als Emulsionszulauf- oder als Monomerenzulauf-Verfahren durchgeführt werden kann. Dabei können die üblichen wasserlöslichen radikalbildenden Polymerisationsinitiatoren, wie besonders wasserlösliche Peroxide und Persulfate, z. B. Wasserstoffperoxid, Natrium-, Kalium- und Ammoniumpersulfat, in den üblichen Mengen eingesetzt werden. Auch sind die üblichen anionischen Emulgatoren, wie sie z. B. in dem Buch von Houben-Weyl « Methoden der organischen Chemie », Band 14/1, Macromolekulare Stoffe, Georg-Thieme-Verlag, Stuttgart, 1971, Seiten 192 bis 208, beschrieben sind, in den üblichen Mengen geeignet. Für die Herstellung der neuen Haftkleber kommen auch Gemische von Polyacrylat-Dispersionen in Frage, wobei die Zusammensetzung der einzelnen Polyacrylat-Dispersionen jeweils innerhalb der beanspruchten Mengenbereiche liegen kann. Für geeignete Gemische können aber auch solche Polyacrylat-Dispersionen eingesetzt werden, deren Polyacrylat neben einem der Acrylester $(a_1)$ oder $(a_2)$ nur einen Teil der Monomeren b) bis e) enthält, wobei dann die Mengen an Monomeren $(a_1)$ bis (e) bzw. $(a_2)$ bis e) außerhalb der beanspruchten Grenzen liegen kann, vorausgesetzt, daß die Summe der in den Polyacrylaten, die in dem Polyacrylat-Dispersions-Gemisch enthaltenen sind, einpolymerisierten Monomoren $(a_1)$, $(a_2)$, b), c), d) und e) innerhalb des beanspruchten Bereiches für diese Monomeren liegt.

Geeignet zur Herstellung eines Haftklebers der genannten Art ist somit z. B. auch ein Gemisch aus einer 50 %igen Polyacrylat-Dispersion (1), deren Polyacrylat sich aus 98,7 Gew.% 2-Ethylhexylacrylat, 1 Gew.% Acrylnitril, 0,2 Gew.% Acrylsäure und 0,1 Gew.% Vinylsulfonsäure aufbaut, im Gemisch mit der doppelten Menge einer 50 %igen Polyacrylat-Dispersion (2), deren Polyacrylat sich aus 83 Gew.% Isobutylacrylat, 6 Gew.% Acrylnitril, 3,5 Gew.% Acrylsäure und 7,5 Gew.% N-Methylolmethacrylamid aufbaut.

Die Menge an Monomeren a) liegt vorzugsweise zwischen 94 und 89 Gew.%, wobei das Verhältnis der Monomeren $(a_1)$ zu $(a_2)$ vorzugsweise zwischen 60 : 40 bis 40 : 60 liegt. Als monoolefinisch ungesättigtes Nitril wird Acrylnitril in einer Menge von 4 bis 6 Gew.%, als monoolefinisch ungesättigte Carbonsäure Acrylsäure in einer Menge von 0,8 bis 2,5 Gew.% vorgezogen und die Menge an olefinisch ungesättigter N-Methylolverbindung liegt vorzugsweise zwischen 1 und 2, die der Vinylsulfonsäure vorzugsweise zwischen 0,2 und 0,5 Gew.%, wobei anstelle der freien Vinylsulfonsäure auch deren wasserlösliche Alkalisalze, insbesondere deren Natrium- oder Ammoniumsalz eingesetzt werden können. Als Komponente B), d. h. als Weichmacher, kommen insbesondere Phthalsäurealkylester, wie Phthalsäuredi-2-ethylhexylester, Adipinsäureester, wie Di-2-ethylhexyladipat, Sebacinsäure- und Acelainsäureester 6 bis 10 C-Atome enthaltender Alkanole, insbesondere die Octylester, sowie Estergemische von Alkylestern der Bernsteinsäure, Glutarsäure und Adipinsäure mit Decanolen (auch Nylonate genannt), abgewandelte native Öle, wie epoxidiertes Sojabohnenöl, Alkylsulfonsäureester des Phenols, Polypropylenglykolalkylphenylether, Thioester, wie Thiodipropionsäure-di-2-ethylhexylester, Citronensäureester, wie Acetyltributylcitrat und Glykoldibenzoate in Betracht. Von besonderem Interesse als Weichmacher sind Phthalsäureester, wie Di-n-butylphthalat, Di-iso-butylphthalat), Di-2-ethylhexylphthalat, Di-n-octylphthalat und Di-iso-octylphthalat sowie Polypropylenglykolmethylolether mit 5 bis 10 Propylenoxidresten.

Als weitere Zusätze können die neuen Haftkleber übliche Mengen an Verdickungsmitteln, Stabilisatoren, Netzmitteln, Hydrophobierungsmitteln und/oder Pigmenten enthalten. Die Haftkleber können ein- oder zweiseitig auf die Substrate in an sich üblicher Weise, z. B. durch Spritzen, Rakeln, Rollen, Gießen, Walzen oder Tauchen aufgetragen werden. Auch ein indirekter Auftrag der Haftkleber, z. B. nach dem Transferverfahren unter Mitverwendung eines siliconisierten Papiers, ist möglich. Nach dem Auftrag der Kleber werden die beschichteten Substrate in üblicher Weise getrocknet.

Außer zur Herstellung von Papieretiketten und Folienetiketten, für die die neuen Haftkleber vorgezogen werden, können sie zur Herstellung von Klebebändern und -folien eingesetzt werden. Als Träger kommen vor allem Papier sowie ferner Folien aus Metall, Polyolefinen, wie Polyethylen und Polypropylen, Polyethylenglykolterephthalat und PVC in Betracht. Papieretiketten, die mit den neuen Haftklebern beschichtet sind, haften praktisch gleichwertig auf Glas, Metallen, Kunststoffen, Holz, gestrichenen Papieren, Pappe, Textilien, Vliesen sowie z. B. Alkydharz-, Polyurethan-, Acrylharz-, Epoxydharz-, Nitrocelluloselacken-, Pulver-Curl-Coat-Lacken oder Plastisolen lackierten oder beschichteten Oberflächen.

In den folgenden Beispielen werden zur Klebeprüfung die Haftkleber mit einer Trockenschichtdicke von 25 g/m² auf siliconisiertes Papier gerakelt und die beschichteten siliconisierten Papiere 5 Minuten bei 70 °C im Trockenschrank getrocknet. Die dabei erhaltenen Klebefilme werden auf Papier (80 g/m²) als Trägermaterial übertragen und die beschichteten Papiere in 2 cm breite Streifen geschnitten.

Zur Bestimmung der Kohäsion werden die Klebestreifen in 2 cm Länge auf ein V2A-Prüfblech geklebt, 24 Stunden gelagert und anschließend im Hängen mit einem 1 kg-Gewicht belastet. Maßstab der Scherfestigkeit ist die Zeit bis zum Abfallen des Gewichts ; man verwendet dabei den Durchschnitt aus 5 Messungen. 0 bis 5 Minuten gilt als schlechte, 24 Stunden als sehr gute und 60 Minuten bis 15 Stunden als geeignete Kohäsion für die Klebeschichten von Etiketten. Bei dieser Prüfung soll möglichst die Klebeschicht zerstört werden (Kohäsionsbruch).

Bei der Bestimmung der Schälfestigkeit wird der Klebestreifen mit verschiedenen, in den folgenden Tabellen angegebenen Substraten verklebt, gegebenenfalls gelagert, und in einer Zug-Dehnungs-Prüfapparatur bei 23 °C im Winkel von 180° mit einer Geschwindigkeit von 75 mm/min rückwärts abgezogen. Es wird als Maß der Schälfestigkeit die Kraft in N angegeben, die sich als Durchschnittswert

3

aus 5 Prüfungen bei den 2 cm breiten Streifen ergibt. Die Klebeschicht soll beim Schältest nicht zerstört werden und sich vollständig vom Substrat ablösen (Adhäsionsbruch). Werte zwischen 1 und 6 N liegen im Bereich dessen, was im allgemeinen für Etiketten gefordert wird.

Die Bestimmung der Durchschlagsfestigkeit erfolgt, um die Migration von niedermolekularen Anteilen des Klebers in das Papier zu erfassen. Das Durchschlagen von z. B. Weichmacher führt zu einem fettigen, grauen Aussehen der Papieroberfläche. Prüfetiketten werden, abgedeckt mit Siliconpapier, bei 60 °C gelagert und in festgelegtem Zeitabstand visuell beurteilt. Die Beurteilung erfolgt nach folgenden Kriterien :

1 = kein Durchschlag
2 = sehr leichter Durchschlag
3 = leichter Durchschlag
4 = starker Durchschlag.

Die in den folgenden Beispielen angegebenen Teile und Prozente beziehen sich auf das Gewicht. Die Abkürzungen A bzw. K bedeuten Adhäsions- bzw. Kohäsions-Bruch.

## Beispiel 1

Eine Mischung, bestehend aus

83 Teilen einer in üblicher Weise hergestellten 50 %igen wäßrigen Polymerdispersion der Polymerisatzusammensetzung

49,5 % n-Butylacrylat
43,8 % 2-Ethylhexylacrylat
4 % Acrylnitril
1,25 % Acrylsäure
1,25 % N-Methylolmethacrylamid
0,2 % Natrium-vinylsulfonat,

die als Emulgator, bezogen auf die Menge des Polymerisats, 0,5 % Natriumdodecylbenzolsulfonat und 1,75 % des Natriumsalzes eines Schwefelsäurehalbesters eines mit 25 mol Ethylenoxid alkoxylierten n-Octylphenols enthält, und
17 Teilen Phthalsäuredi-2-ethylhexylester.

## Beispiel 2

Eine Mischung, bestehend aus

83 Teilen einer in üblicher Weise hergestellten 50 %igen wäßrigen Polymerdispersion der Polymerisatzusammensetzung

30 % n-Butylacrylat
61 % 2-Ethylhexylacrylat
6 % Acrylnitril
1,5 % Acrylsäure
1,5 % N-Methylolmethacrylamid und
0,4 % Natrium-vinylsulfonat,

die als Emulgator, bezogen auf das Polymerisat, 3,4 % des in Beispiel 1 angegebenen sulfatierten Oxalkylierungsproduktes (10 mol Ethylenoxid) enthält, und

17 Teilen eines Phthalsäurediisodecylesters.

## Beispiel 3

Eine Mischung bestehend aus

75 Teilen einer Polymerdispersion wie Beispiel 1 mit
25 Teilen eines Polypropylenglykolmethylvinylethers (7 Propylenoxidreste) als Weichmacher

## Beispiel 4

40 Teile einer in üblicher Weise hergestellten 50 %igen wäßrigen Dispersion eines Copolymerisats (1) aus

90 % n-Butylacrylat,
8 % 2-Ethylhexylacrylat und
2 % Acrylsäure,

die als Emulgator, bezogen auf das Copolymerisat (1), 0,8 % Na-Dodecylbenzolsulfonat enthält,

45 Teile einer in üblicher Weise hergestellten 50 %igen wäßrigen Dispersion eines Copolymerisats (2) aus

88 % 2-Ethylhexylacrylat,
8 % Acrylnitril,
2 % N-Methylolmethacrylamid,
1,6 % Acrylsäure und
0,4 % Na-Vinylsulfonat,

die als Emulgator, bezogen auf das Copolymerisat (2), 3 % des in Beispiel 1 angegebenen sulfatierten Oxethylierungsproduktes enthält, und

15 Teile Phthalsäure-di-iso-octylester.

Beispiel 5

24 Teile einer in üblicher Weise hergestellten 50 %igen wäßrigen Dispersion eines Copolymerisats (1) aus

97 % n-Butylacrylat,
1,8 % N-Methylolmethacrylamid und
1,2 % Acrylsäure,

die als Emulgator, bezogen auf das Copolymerisat (1), 1,5 % Natrium-Dodecylbenzolsulfonat enthält,

56 Teile einer in üblicher Weise hergestellten 50 %igen Dispersion eines Copolymerisats (2) aus

80 % 2-Ethylhexylacrylat,
10 % n-Butylacrylat,
1,8 % Acrylsäure,
8 % Acrylnitril und
0,2 % Na-Vinylsulfonat,

die als Emulgator, bezogen auf das Copolymerisat (2), 2,5 % des in Beispiel 1 angegebenen sulfatierten Oxethylierungsproduktes enthält, und

20 Teile Phthalsäure-di-isodecylester.

Vergleichsversuch 1

Handelsübliches, ablösbares Papieretikett mit einer Haftklebemasse auf Basis Kautschuk/Harz/Öl, aufgebracht aus organischer Lösung auf Etikettenpapier 80 g/m².

Vergleichsversuch 2

Handelsübliches, ablösbares Papieretikett mit einer Haftklebemasse auf Basis Polyisobutylen/Harz, aufgebracht aus organischer Lösung auf Etikettenpapier 80 g/m².

Vergleichsversuch 3

Papieretikett, beschichtet mit einer in üblicher Weise hergestellten 50 %igen wäßrigen Polymerdispersion der Polymerisatzusammensetzung

99 % n-Butylacrylat
1 % Acrylsäure,

die 1,5 %, bezogen auf das Polymerisat, des in Beispiel 1 angegebenen Alkylsulfonats als Emulgator enthält.

Vergleichsversuch 4

Papieretikett, beschichtet mit einer Mischung, bestehend aus

83 Teilen der in Vergleichsversuch 3 angegebenen Polymerdispersion und 17 Teilen Phthalsäuredi-2-ethylhexylester.

Vergleichsversuch 5

83 Teile der in Beispiel 4 angegebenen Polymerdispersion (2) und 15 Teile Phthalsäure-di-iso-octylester.

Die Ergebnisse der Klebeprüfungen zeigen die folgenden Tabellen :

Tabelle 1

| Beispiel Nr. | Durchschlag-test Lage-rung bei 60°C (4 Wochen) | Substrat | Lagerung | Scherfestig-keit * | Schälfestig-keit in N |
|---|---|---|---|---|---|
| 1 | 2 | V2A | - | K 6 h 45 min | 1,3 |
| | | V2A | 3 Tage 50°C | | 1,9 |
| | | Hart-PVC | 3 Tage 50°C | | 1,7 |
| | | Bedruckter Karton | 3 Tage 50°C | | 4,9 |
| 2 | 1 | V2A | - | K 6 h 40 min | 1,5 |
| | | V2A | 3 Tage 50°C | | 2,0 |
| | | Hart-PVC | 3 Tage 50°C | | 3,1 |
| | | Bedruckter Karton | 3 Tage 50°C | | 4,0 |
| 3 | 2 | V2A | - | K 1 h | 1,1 |
| | | V2A | 3 Tage 50°C | | 1,1 |
| | | Hart-PVC | 3 Tage 50°C | | 1,0 |
| | | Bedruckter Karton | 3 Tage 50°C | | 5,1 |
| 4 | 2 | V2A | - | K 7 h 15 min | 1,2 |
| | | V2A | 3 Tage 50°C | | 2,1 |
| | | Hart-PVC | 3 Tage 50°C | | 1,6 |
| | | Bedruckter Karton | 3 Tage 50°C | | 4,7 |
| 5 | 1 | V2A | - | K 7 h 10 min | 1,3 |
| | | V2A | 3 Tage 50°C | | 2,8 |
| | | Hart-PVC | 3 Tage 50°C | | 3,3 |
| | | Bedruckter Karton | 3 Tage 50°C | | 3,9 |

Siehe Tabelle 2 Seite 7 f.)

Tabelle 2

| Vergleichs-versuch | Durchschlag-test Lage-rung bei 60°C (4 Wochen) | Substrat | Lagerung | Scherfestig-keit | Schälfestig-keit in N |
|---|---|---|---|---|---|
| 1 | 4 | V2A | - | K 7 h | 3,0 |
| | | V2A | 3 Tage 50°C | | 3,8 |
| | | Hart-PVC | 3 Tage 50°C | | 4,6 |
| | | Bedruckter Karton | 3 Tage 50°C | | 4,6 |
| 2 | 4 | V2A | - | K 30 min | 4,7 |
| | | V2A | 3 Tage 50°C | | 5,8 |
| | | Hart-PVC | 3 Tage 50°C | | 9,8 |
| | | Bedruckter Karton | 3 Tage 50°C | | 10,5 |
| 3 | 1 | V2A | - | K 24 h | 3,2 |
| | | V2A | 3 Tage 50°C | | 3,2 |
| | | Hart-PVC | 3 Tage 50°C | | 8,5 |
| | | Bedruckter Karton | 3 Tage 50°C | | 4,1 |
| 4 | 1 | V2A | - | K 1 h | 2,3 |
| | | V2A | 3 Tage 50°C | | 2,2 |
| | | Hart-PVC | 3 Tage 50°C | | 6,4 |
| | | Bedruckter Karton | 3 Tage 50°C | | 3,2 |
| 5 | 3 | V2A | - | K 9 h | 0,7 |
| | | V2A | 3 Tage 50°C | | 0,8 |
| | | Hart-PVC | 3 Tage 50°C | | 1,0 |
| | | Bedruckter Karton | 3 Tage 50°C | | 4,5 |

## Patentanspruch

Haftkleber auf Basis von wäßrigen Polyacrylatdispersionen die Acrylester 4 bis 8 C-Atome enthaltender Alkanole einpolymerisiert enthalten und die einen Gehalt an Weichmacher aufweisen, dadurch gekennzeichnet, daß sie

A) 70 bis 90 % ihres Gewichts einer oder mehrerer Polyacrylat-Dispersionen, die sich insgesamt aus

a) 96 bis 84 Gew.% eines Gemisches aus ($a_1$) 2-Ethylhexylacrylat und $a_2$) n-Butyl- und/oder iso-Butyl-acrylat und/oder -methacrylat in einem Gewichtsverhältnis von ($a_1$) : ($a_2$) von 70 : 30 bis 30 : 70,

b) 3 bis 7 Gew.% Acryl- und/oder -methacrylnitril,

c) 0,5 bis 3 Gew.% Acryl- und/oder -methacrylsäure,

d) 0,5 bis 5 Gew.% N-Methylol-acrylamid und/oder -methacrylamid und

e) 0 bis 1 Gew.% Vinylsulfonsäure aufbauen,

wobei sich die Angaben in Gewichtsprozent für die Komponenten a) bis e) auf das Gewicht der Polyacrylate beziehen, und

B) 10 bis 30 Gew.% ihres Gewichts weichmacher enthalten.

## Claim

A pressure-sensitive adhesive based on aqueous dispersions of polyacrylates which contain acrylic esters of alkanols of 4 to 8 carbon atoms as copolymerized units, the dispersions also containing a plasticizer, which adhesive contains

A) from 70 to 90 % by weight of one or more polyacrylate dispersions which overall are synthesized from

a) 96 to 84 % by weight of a mixture of ($a_1$) 2-ethylhexyl acrylate and ($a_2$) n-butyl acrylate and/or isobutyl acrylate and/or n-butyl methacrylate and/or isobutyl methacrylate in a weight ratio of ($a_1$) to ($a_2$) of from 70 : 30 to 30 : 70,

b) from 3 to 7 % by weight of acrylonitrile and/or methacrylonitrile,

c) from 0.5 to 3 % by weight of acrylic acid and/or methacrylic acid,

d) from 0.5 to 5 % by weight of N-methylolacrylamide and/or N-methylolmethacrylamide, and
e) from 0 to 1 % by weight of vinylsulfonic acid,
the percentages by weight of a) to e) being based on the weight of the polyacrylates, and
B) from 10 to 30 % by weight of plasticizer.

**Revendication**

Colles de contact à base de dispersions aqueuses de polyacrylate, qui contiennent en polymérisation des esters acryliques d'alcanols comportant 4 à 8 atomes-C et qui présentent une teneur en plastifiant, caractérisées par le fait qu'elles contiennent

A) 70 à 90 % de leur poids d'une ou plusieurs dispersions de polyacrylate qui sont constitués globalement par

(a) 96 à 84 % en poids d'un mélange de $(a_1)$, acrylate de 2-éthylhexyle et $(a_2)$ acrylate et/ou méthacrylate de n-butyle et/ou iso-butyle dans un rapport pondéral de $(a_1)/(a_2)$ de 70/30 à 30/70

(b) 3 à 7 % en poids d'acryl- et/ou méthacrylnitrile

(c) 0,5 à 3 % en poids d'acide acrylique et/ou méthacrylique

(d) 0,5 à 5 % en poids de N-méthylol-acrylamide et/ou -méthacrylamide, et

(e) 0 à 1 % en poids d'acide vinylsulfonique, les indications de pourcentages en poids pour les composants a) à e) se rapportant au poids du polyacrylate, et

B) 10 à 30 % de leur poids de plastifiant.